(19) Europäisches Patentamt
European Patent Office
Office européen des brevets

(11) EP 4 036 155 A1

(12) EUROPEAN PATENT APPLICATION

(43) Date of publication:
**03.08.2022 Bulletin 2022/31**

(21) Application number: **22153230.2**

(22) Date of filing: **25.01.2022**

(51) International Patent Classification (IPC):
***C08G 77/442*** (2006.01) ***C08F 283/12*** (2006.01)
***C08L 33/04*** (2006.01) ***C08L 67/00*** (2006.01)
***C08L 75/04*** (2006.01)

(52) Cooperative Patent Classification (CPC):
(C-Sets available)
**C08G 77/442; C08F 283/124; C08L 33/04; C08L 75/06; C09D 175/06** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.01.2021 JP 2021011978**

(71) Applicant: **Nissin Chemical Industry Co., Ltd.**
**Fukui 915-0802 (JP)**

(72) Inventor: **WATANABE, Kentaro**
**Echizen-shi, 915-0802 (JP)**

(74) Representative: **V.O.**
**P.O. Box 87930**
**2508 DH Den Haag (NL)**

# (54) COATING COMPOSITION, A COMPOSITION FOR COATING FURNITURE OR BUILDING INTERIOR, AND AN ARTICLE COMPRISING THE COATING COMPOSITION

(57) The purpose of the present invention is to provide a coating composition which gives a substrate excellent feel, abrasion resistance, stain resistance, flame retardancy, and weather resistance; and an article, furniture and a building interior material having a coating formed from the aforesaid coating composition. The present invention provides a coating composition comprising the following components (A) to (D):
(A) an emulsion of a silicone acrylic copolymer resin which is a copolymer of 60 to 99 parts by mass of (a1) a polyorganosiloxane represented by the formula (1) and 1 to 40 parts by mass of (a2) an acrylic acid ester monomer and/or a methacrylic acid ester monomer, provided that the total amount of components (a1) and (a2) is 100 parts by mass, the emulsion being in an amount of 0.5 to 20 parts by mass as a solid content;
(B) at least one resin emulsion in an amount of 20 to 80 parts by mass as a solid content, selected from the group consisting of acrylic resin emulsions other than component (A), urethane resin emulsions and alkyd resin emulsions;
(C) pigment in an amount of 1 to 50 parts by mass; and
(D) a flame retardant in an amount of 1 to 10 parts by mass, provided that the total mass of the solid contents of components (A) and (B) and the amounts of components (C) and (D) is 100 parts by mass.



Processed by Luminess, 75001 PARIS (FR)

(Cont. next page)

(52) Cooperative Patent Classification (CPC): (Cont.)

C-Sets
**C08F 283/124, C08F 220/14;**
**C08F 283/124, C08F 220/14, C08F 220/1804;**
**C08L 33/04, C08L 51/085;**
**C08L 33/04, C08L 83/00;**
**C08L 75/06, C08L 51/085;**
**C08L 75/06, C08L 83/00;**
**C09D 175/06, C08L 51/085;**
**C09D 175/06, C08L 83/00**

## Description

CROSS REFERENCE

This application claims the benefits of Japanese Patent Application No. 2021-011978 filed on January 28, 2021, the contents of which are hereby incorporated by reference.

BACKGROUND OF THE INVENTION

The present invention relates to a coating composition, in particular a coating composition for coating furniture and building interior materials, more specifically, a water-based coating composition which is to be applied on a substrate such as wood, resin, metal, or ceramics to give the substrate excellent feel, abrasion resistance, stain resistance, flame retardance, and weather resistance, while maintaining the design that is specific to the substrate. The present invention relates also to an article having a coating formed from the aforesaid coating composition.

In the field of coatings for furniture or building interior materials, the dispersion medium has recently been changed from an organic solvent-based one to a water-based one in consideration of environmental problems. In particular, volatile organic compounds may cause sick house syndrome, so that water-based coatings are eagerly desired. Acrylic resins, urethane resins and alkyd resins have excellent film-forming ability and, therefore, have been used widely as a binder resin for water-based coatings. Silicone resins are known to give a substrate a sliding property and water repellency.

For example, Japanese Patent Application Laid-Open No. 2006-341163 (Patent Literature 1) describes a top coating for building interior, which is a mixture of a silicone emulsion with another synthetic resin emulsion. When a coating comprises a silicone emulsion, the resulting coating film may have a deteriorated feel due to bleeding-out of the oily material, deteriorated abrasion resistance, or deteriorated adhesion to a substrate, so that the intended coating film is sometimes not obtained. Further, it is difficult to remove a stain.

Japanese Patent Application Laid-Open No. 2011-213941 (Patent Literature 2) describes a water-based coating composition comprising a hydroxyl group-containing (meth)acrylic polymer emulsion and an aqueous dispersion of a silicone resin. Patent Literature 2 states that mixing of the acryl emulsion with the silicone-based emulsion improves water resistance. However, it would be difficult to attain excellent feel and stain resistance by this composition.

The present inventor discloses in Japanese Patent Application Laid-Open No. 2013-67787 (Patent Literature 3) that a coating composition comprising a mixture of a urethane, acrylic, or a vinyl chloride emulsion with a silicone resin provides water repellency to a substrate. However, the sliding property provided by this coating composition is not sufficient, so that there is room to improve the feel. The abrasion resistance is also not sufficient, so that there is room to improve the abrasion resistance.

PRIOR LITERATURE

PATENT LITERATURE

Patent Literature 1: Japanese Patent Application Laid-Open No. 2006-341163
Patent Literature 2: Japanese Patent Application Laid-Open No. 2011-213941
Patent Literature 3: Japanese Patent Application Laid-Open No. 2013-67787

SUMMARY OF THE INVENTION

PROBLEMS TO BE SOLVED BY THE INVENTION

The purpose of the present invention is to provide a coating composition which gives a substrate excellent feel, abrasion resistance, stain resistance, flame retardancy, and weather resistance; and an article, furniture and a building interior material having a coating formed from the aforesaid coating composition.

The present inventor conducted keen research to solve the aforesaid problems and has found that a coating composition comprising (A) a specific silicone acrylic copolymer resin emulsion; (B) a specific resin emulsion other than the aforesaid component (A); (C) a pigment; and (D) a flame retardant in a predetermined proportion, and a coating formed from the aforesaid coating composition are suited for coating furniture and building interior.

That is, the present invention provides a coating composition comprising the following components (A) to (D):

(A) an emulsion of a silicone acrylic copolymer resin comprised of 60 to 99 parts by mass of (a1) a polyorganosiloxane represented by the following formula (1) and 1 to 40 parts by mass of (a2) an acrylic acid ester monomer and/or a methacrylic acid ester monomer, provided that the total amount of components (a1) and (a2) is 100 parts by mass,

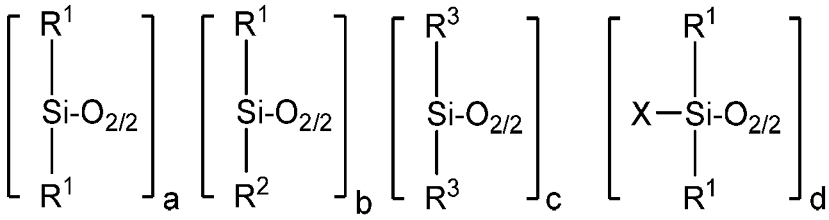
(1)

wherein $R^1$ is, independently of each other, a substituted or unsubstituted monovalent hydrocarbon group having 1 to 20 carbon atoms, precluding the groups defined for $R^2$ and a phenyl group; $R^2$ is, independently of each other, an alkenyl group having 2 to 6 carbon atoms or an alkyl group which has 1 to 6 carbon atoms and of which a part of the hydrogen atoms bonded to a carbon atom is substituted with a mercapto group, a vinyl group, an acryloxy group, or a methacryloxy group; $R^3$ is, independently of each other, a phenyl group or the group defined for $R^1$, and at least one of the $R^3$s bonded to the same silicon atom is a phenyl group; and X is, independently of each other, a substituted or unsubstituted monovalent hydrocarbon group having 1 to 20 carbon atoms, an alkoxy group having 1 to 20 carbon atoms, or a hydroxyl group; a, b, c and d are numbers satisfying the equations: $0.11 \le a/(a+b+c+d) < 1$, $0.00001 \le b/(a+b+c+d) \le 0.05$, $0 \le c/(a+b+c+d) \le 0.6$, and $0.000001 \le d/(a+b+c+d) \le 0.24$; the emulsion being in an amount of 0.5 to 20 parts by mass as a solid content;
(B) at least one resin emulsion in an amount of 20 to 80 parts by mass as a solid content, selected from the group consisting of an acrylic resin emulsion other than component (A), a urethane resin emulsion and an alkyd resin emulsion;
(C) a pigment in an amount of 1 to 50 parts by mass; and
(D) a flame retardant in an amount of 1 to 10 parts by mass,
provided that the total mass of the solid contents of components (A) and (B) and the amounts of components (C) and (D) is 100 parts by mass.

## EFFECTS OF THE INVENTION

The coating composition of the present invention forms a coating having excellent feel, abrasion resistance, stain resistance, flame retardancy, and weather resistance. The aforesaid coating gives a substrate excellent feel, abrasion resistance, stain resistance, flame retardancy and weather resistance, while maintaining the design specific to the substrate. The coating composition of the present invention is water-based and, therefore, advantageous from the standpoints of workability and the environment. The water-based coating composition of the present invention is suited for furniture and building interior.

## DETAILED DESCRIPTION OF THE INVENTION

The components will be described below in detail.

### (A) Emulsion of silicone acrylic copolymer resin

Component (A) is an emulsion of a silicone acrylic copolymer resin composed of 60 to 99 parts by mass of (a1) a polyorganosiloxane represented by the following formula (1) and 1 to 40 parts by mass of (a2) an acrylic acid ester monomer and/or a methacrylic acid ester monomer, provided that the total amount of components (a1) and (a2) is 100 parts by mass,

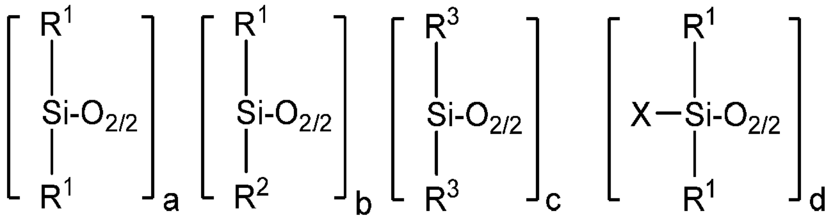

(1)

wherein $R^1$ is, independently of each other, a substituted or unsubstituted monovalent hydrocarbon group having 1 to 20 carbon atoms, precluding the groups defined for $R^2$ and a phenyl group; $R^2$ is, independently of each other, an alkenyl group having 2 to 6 carbon atoms or an alkyl group which has 1 to 6 carbon atoms and of which a part of the hydrogen atoms bonded to a carbon atom is substituted with a mercapto group, a vinyl group, an acryloxy group, or a methacryloxy group; $R^3$ is, independently of each other, a phenyl group or the group defined for $R^1$, and at least one of the $R^3$s bonded to the same silicon atom is a phenyl group; and X is, independently of each other, a substituted or unsubstituted monovalent hydrocarbon group having 1 to 20 carbon atoms, an alkoxy group having 1 to 20 carbon atoms, or a hydroxyl group; a, b, c and d are numbers satisfying the equations: $0.11 \leq a/(a+b+c+d) < 1$, $0.00001 \leq b/(a+b+c+d) \leq 0.05$, $0 \leq c/(a+b+c+d) \leq 0.6$, and $0.000001 \leq d/(a+b+c+d) \leq 0.24$.

More specifically, component (A) is an emulsion of a silicone acrylic copolymer resin obtained by the emulsion graft polymerization of the polyorganosiloxane (a1) represented by the above formula (1) and the acrylic acid ester monomer and/or methacrylic acid ester monomer (a2).

The mass ratio of the component (a1) and component (a2) is preferably such that the amount of component (a1) is 60 to 99 parts by mass and the amount of component (a2) is 1 to 40 parts by mass, relative to the total 100 parts by mass of components (a1) and (a2). Further preferably, the amount of component (a1) is 70 to 95 parts by mass and the amount of component (a2) is 5 to 30 parts by mass.

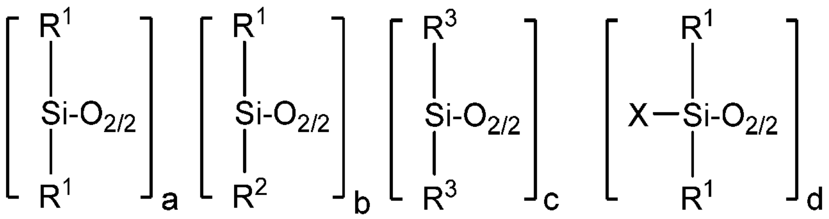

(1)

$R^1$ is, independently of each other, a substituted or unsubstituted, monovalent hydrocarbon group having 1 to 20, preferably 1 to 10, more preferably 1 to 6 carbon atoms. Examples of the monovalent hydrocarbon group include alkyl groups such as methyl, ethyl, propyl, butyl, pentyl, hexyl, heptyl, octyl, nonyl, decyl, dodecyl, tetradecyl, hexadecyl, and octadecyl groups; cycloalkyl groups such as cyclopentyl, cyclohexyl, and cycloheptyl groups; aryl groups such as tolyl and naphthyl groups; alkenylaryl groups such as a vinylphenyl group; aralkyl groups such as benzyl, phenylethyl, and phenylpropyl groups; and alkenylaralkyl groups such as vinylbenzyl and vinylphenylpropyl groups; and those groups in which a part or all of the hydrogen atoms are substituted with a halogen atom such as fluorine, bromine, or chlorine, a carboxyl group, an alkoxy group, an alkenyloxy group, or an amino group. $R^1$ is preferably an unsubstituted alkyl group having 1 to 6 carbon atoms, more preferably a methyl group.

$R^2$ is, independently of each other, an alkenyl group having 2 to 6 carbon atoms or an alkyl group which has 1 to 6 carbon atoms and of which a part of the hydrogen atoms bonded to a carbon atom is substituted with a mercapto group, a vinyl group, an acryloxy group, or a methacryloxy group. Examples of the alkenyl group having 2 to 6 carbon atoms include vinyl and allyl groups. $R^2$ is preferably an alkyl group having 1 to 6 carbon atoms and having an acryloxy or methacryloxy group. The aforesaid alkyl group is preferably a methyl group, an ethyl group, or a propyl group. $R^3$ is, independently of each other, a phenyl group or the aforesaid group defined for $R^1$. At least one of the $R^3$s bonded to the same silicon atom is a phenyl group.

X is, independently of each other, a substituted or unsubstituted, monovalent hydrocarbon group having 1 to 20, preferably 1 to 10, more preferably 1 to 6 carbon atoms; an alkoxy group having 1 to 20, preferably 1 to 10, more preferably 1 to 4 carbon atoms; or a hydroxyl group. Examples of the substituted or unsubstituted monovalent hydrocarbon group having 1 to 20 carbon atoms include the aforesaid groups defined for $R^1$. Examples of the alkoxy group having 1 to 20 carbon atoms include methoxy, ethoxy, propoxy, butoxy, hexyloxy, heptyloxy, octyloxy, decyloxy, and tetradecyloxy groups. X is preferably hydroxyl, methyl, butyl, or phenyl groups.

In the formula (1), a, b, c, and d are a real number. "a" satisfies the following equation $0.11 \leq a/(a+b+c+d) < 1$ (for example, 0.999999 or less), preferably $0.59 \leq a/(a+b+c+d) \leq 0.99998$. "b" satisfies the following equation $0.00001 \leq b/(a+b+c+d) \leq 0.05$, preferably $0.00001 \leq b/(a+b+c+d) \leq 0.01$. "c" satisfies the following equation $0 \leq c/(a+b+c+d) \leq 0.6$, preferably $0 \leq c/(a+b+c+d) \leq 0.30$. "d" satisfies the following equation $0.000001 \leq d/(a+b+c+d) \leq 0.24$, preferably $0.00001 \leq d/(a+b+c+d) \leq 0.1$. If b/(a+b+c+d) exceeds 0.05, the feel of a coated film is not improved and the stain resistance is worse. If d/(a+b+c+d) exceeds 0.24, the weight average molecular weight is too small and the feel is not improved, which is not preferred. "c" is the number of the siloxane units having a phenyl group. On account of "c" being within the aforesaid range, the coating has preferable transparency and heat resistance.

The polyorganosiloxane (a1) has a weight average molecular weight of 5,000 to 500,000, preferably 8,000 to 450,000, more preferably 100,000 to 450,000, still more preferably 150,000 to 400,000. If the polyorganosiloxane has the aforesaid weight average molecular weight, the coating agent provides a good sliding property peculiar to silicones.

Here, the molecular weight of the polyorganosiloxane is calculated from the specific viscosity, ηsp, at 25°C of a 1g/100ml solution of the polyorganosiloxane in toluene.

$$\eta sp=(\eta/\eta 0)-1$$

(η0: viscosity of toluene, η: viscosity of the solution)

ηsp=[η]+0.3[η] square

$$[\eta]=2.15\times10^{-4}M^{0.65}$$

More specifically, 20 g of the emulsion is mixed with 20 g of isopropyl alcohol (IPA) to break the emulsion and, then, IPA is removed and a residual rubbery polyorganosiloxane is dried at 105°C for 3 hours. The resulting polyorganosiloxane is dissolved in toluene in a concentration of 1g/100 ml. The viscosity of the solution is determined at 25°C by a Ubbelohde viscometer. The molecular weight is calculated by substituting the viscosity in the aforesaid equation (Reference: Nakamuta, Journal of the Chemical Society of Japan, 77, 858 [1956]; Doklady Akad. Nauk. U.S.S.R. 89 65 [1953]).

The aforesaid polyorganosiloxane (a1) is preferably in the form of an emulsion and may be a commercially available product or may be synthesized in-house. The polyorganosiloxane (a1) may be easily synthesized by any known emulsion polymerization method. For example, a cyclic organosiloxane which may have a fluorine atom, a (meth)acryloxy group, a carboxyl group, a hydroxyl group, or an amino group, or an α,ω-dihydroxysiloxane oligomer, an α,ω-dialkoxysiloxane oligomer, or an alkoxysilane, and a silane coupling agent represented by the following formula (2) are emulsified and dispersed in water with an anionic surfactant and, then, polymerized, if needed, in the presence of a catalyst such as an acid to obtain the polyorganosiloxane (a1).

$$R^5{}_{(4-e-f)}R^6{}_fSi(OR^7)_e \qquad (2)$$

wherein $R^5$ is a monovalent organic group having a polymerizable double bond, specifically an alkyl group which has 1 to 6 carbon atoms and is substituted with an acryloxy or methacryloxy group; $R^6$ is an alkyl group having 1 to 4 carbon atoms; $R^7$ is an alkyl group having 1 to 4 carbon atoms; e is an integer of 2 or 3; f is an integer of 0 or 1; and e+f = 2 or 3.

Examples of the aforesaid cyclic organosiloxane include

hexamethylcyclotrisiloxane (D3), octamethylcyclotetrasiloxane (D4),
decamethylcyclopentasiloxane (D5), dodecamethylcyclohexasiloxane (D6),
1,1-diethylhexamethylcyclotetrasiloxane, phenylheptamethylcyclotetrasiloxane,
1,1-diphenylhexamethylcyclotetrasiloxane,
1,3,5,7-tetravinyltetramethylcyclotetrasiloxane,
1,3,5,7-tetramethylcyclotetrasiloxane,
1,3,5,7-tetracyclohexyltetramethylcyclotetrasiloxane,
tris(3,3,3-trifluoropropyl)trimethylcyclotrisiloxane,
1,3,5,7-tetra(3-methacryloxypropyl)tetramethylcyclotetrasiloxane,
1,3,5,7-tetra(3-acryloxypropyl)tetramethylcyclotetrasiloxane,
1,3,5,7-tetra(3-carboxypropyl)tetramethylcyclotetrasiloxane,
1,3,5,7-tetra(3-vinyloxypropyl)tetramethylcyclotetrasiloxane,
1,3,5,7-tetra(p-vinylphenyl)tetramethylcyclotetrasiloxane,

1,3,5,7-tetra[3-(p-vinylphenyl)propyl]tetramethylcyclotetrasiloxane,
1,3,5,7-tetra(N-acryloyl-N-methyl-3-aminopropyl)tetramethylcyclotetrasiloxane, and
1,3,5,7-tetra(N,N-bis(lauroyl)-3-aminopropyl)tetramethylcyclotetrasiloxane.
Octamethylcyclotetrasiloxane and decamethylcyclopentasiloxane are preferred.

Examples of the silane coupling agent include acrylic silanes such as γ-(meth)acryloxypropyltrimethoxysilane, γ-(meth)acryloxypropyltriethoxysilane, γ-(meth)acryloxypropyltripropoxysilane, γ-(meth)acryloxypropyltriisopropoxysilane, γ-(meth)acryloxypropyltributoxysilane, γ-(meth)acryloxypropylmethyldimethoxysilane, γ-(meth)acryloxypropylmethyldiethoxysilane, γ-(meth)acryloxypropylmethyldipropoxysilane, γ-(meth)acryloxypropylmethyldiisopropoxysilane, and γ-(meth)acryloxypropylmethyldibutoxysilane; and mercaptosilanes such as γ-mercaptopropylmethyldimethoxysilane and γ-mercaptopropyltrimethoxysilane. Oligomers obtained by the condensation polymerization of the aforesaid silanes are sometimes preferred for decreasing the generation of an alcohol. In particular, acrylic silanes are preferred. Herein "(meth)acryloxy" means acryloxy or methacryloxy. These silane coupling agents are preferably used in an amount of 0.01 to 10 parts by mass, more preferably 0.01 to 5 parts by mass, relative to 100 parts by mass of the cyclic organosiloxane. If the amount is less than 0.01 part by mass, the transparency of the coating agent thus obtained is lower. If the amount is more than 10 parts by mass, the coating agent may not have a sliding property.

On account of copolymerizing the cyclic organosiloxane with the aforesaid silane coupling agent, a polymerizable group ($R^2$) is introduced onto the polyorganosiloxane and, thereby, the (meth)acrylic acid ester monomer (a2) may be grafted on the polyorganosiloxane (a1).

The polymerization catalyst used for the polymerization may be any known polymerization catalyst. Among them, strong acids are preferred such as hydrochloric acid, sulfuric acid, dodecylbenzenesulfonic acid, citric acid, lactic acid, and ascorbic acid. Dodecylbenzenesulfonic acid has an emulsifying ability and is preferred.

The acid catalyst is preferably used in an amount of 0.01 to 10 parts by mass, more preferably 0.2 to 2 parts by mass, relative to 100 parts by mass of the cyclic organosiloxane.

Examples of the surfactant to be used in the polymerization include anionic surfactants such as sodium lauryl sulfate, sodium laurate sulfate, N-acylamino acid salts, N-acyl taurine salts, aliphatic soaps, and alkyl phosphates . Preferred are anionic surfactants which are easily soluble in water and have no polyethylene oxide chain. More preferred are N-acylamino acid salts, N-acyl taurine salts, aliphatic soaps, and alkyl phosphates, and particularly preferred are sodium methyl lauroyl taurate, sodium methyl myristoyl taurate, and sodium lauryl sulfate.

The anionic surfactant is preferably used in an amount of 0.1 to 20 parts by mass, more preferably 0.5 to 10 parts by mass, relative to 100 parts by mass of the cyclic organosiloxane.

The polymerization temperature is preferably 50 to 75°C and the polymerization time is preferably 10 hours or more, more preferably 15 hours or more. Further, the polymerization is preferably followed by aging at 5 to 30°C for 10 hours or more.

The acrylic acid ester or methacrylic acid ester (a2) (hereinafter, referred to as "acrylic component") is a linear or branched alkyl ester having 1 to 20 carbon atoms, preferably 1 to 6 carbon atoms, more preferably 1 to 3 carbon atoms; and may have a functional group such as an amide, vinyl, carboxyl, or hydroxyl group. Examples of the acrylic acid ester and methacrylic acid ester include methyl acrylate, ethyl acrylate, butyl acrylate, 2-ethylhexyl acrylate, methyl methacrylate, ethyl methacrylate, butyl methacrylate, and 2-ethylhexyl methacrylate. One or more of these esters may be copolymerized. Methyl acrylate, ethyl acrylate, methyl methacrylate, or ethyl methacrylate is preferred. The acrylic acid ester or methacrylic acid ester may preferably have a glass transition temperature (hereinafter, referred to as "Tg") of 120°C or below, more preferably 110°C or less. The lower limit is preferably -50°C. Preferably, component (a2) may be selected for the graft copolymerization so as to provide a silicone acrylic copolymer resin having a Tg of 0 °C or higher, more preferably 5°C or higher. On account of the silicone acrylic resin having the aforesaid Tg, the stain-proofing property of a resin obtained is increased.

The aforesaid graft copolymerization of the polyorganosiloxane (a1) and the (meth)acrylic acid ester monomer (a2) may be conducted according to any conventional method. For example, a radical initiator may be used. The radical initiator is not particularly limited. Examples of the radical initiator include persulfates such as potassium persulfate and ammonium persulfate, aqueous hydrogen persulfate, t-butyl hydroperoxide, and hydrogen peroxide. A redox system with a reducing agent such as sodium bisulfite, Rongalite, L-ascorbic acid, tartaric acid, saccharides, and amines may be used in combination with the aforesaid radical initiator if necessary.

An anionic surfactant such as sodium lauryl sulfate, sodium laureth sulfate, N-acylamino acid salt, N-acyl taurine salt, aliphatic soap, or an alkyl phosphate may be added in order to improve the stability of the emulsion. A nonionic emulsifier such as polyoxyethylene lauryl ether or polyoxyethylene tridecyl ether may also be added.

Further, a chain transfer agent may be added to control the molecular weight.

The silicone acrylic copolymer resin emulsion (A) preferably has a solid content of 35 to 50 mass% and a viscosity (25°C) of 500 mPa·s or less, more preferably 20 to 300 mPa·s. The viscosity may be determined with a rotational viscometer. The emulsion particles have an average particle diameter of 1000 nm or less, preferably 100 nm to 500 nm,

more preferably 150 to 350 nm. If the average particle diameter is too large, whitening is observed. If the average particle diameter is too small, dispersibility is lower. The particle diameter of the resin emulsion is determined by JEM-2100TM, ex JEOL.

The solid content of the silicone acrylic copolymer resin emulsion (A) is preferably 0.5 to 20 parts by mass, more preferably 1.5 to 15 parts by mass, still more preferably 2 to 10 parts by mass, relative to the total 100 parts by mass of the solid content of component (A), the solid content of component (B), component (C), and component (D). If the solid content of component (A) is less than the aforesaid lower limit, feel or stain resistance is not sufficient. If the solid content of component (A) is more than the aforesaid upper limit, the surface of the coating film is easily stained. The solid content of component (A) in the coating composition is preferably 0.1 to 9 mass%, preferably 0.5 to 7 mass%. The silicone acrylic copolymer resin (A) preferably has a glass transition temperature (Tg) of 0°C or higher, more preferably 5°C or higher.

The glass transition temperature (T) of the polymer resin is calculated according to the following equation:

$$(Pa+Pb+Pc)/T=(Pa/Ta)+(Pb/Tb)+(Pc/Tc)$$

In the above equation, T is the glass transition temperature (K) of polymer particles; Pa, Pb, and Pc are contents (mass%) of the monomers a, b, and c, respectively; and Ta, Tb, and Tc are glass transition temperatures (K) of the monomers a, b, and c, respectively. The glass transition temperature is determined according to JIS K 7121.

If the other monomer is added, the aforesaid equation may also be applied. The glass transition temperature of the resin emulsion (B) may be calculated according to the aforesaid equation.

(B) Resin emulsion

Component (B) is at least one resin emulsion selected from acrylic resin emulsions other than component (A), urethane resin emulsions, and alkyd resin emulsions. More specifically, component (B) is an acrylic resin emulsion comprising a (meth)acrylic monomer such as (meth)acrylic acid or (meth)acrylic acid ester, a urethane resin emulsion, or an alkyd resin emulsion. Preferably, it has a film-forming ability. The film-forming ability is the ability of forming a film, the surface of which does not have particle-like unevenness at a predetermined temperature or higher after drying and which does not cause small cracks during drying. the drying temperature range for the formation of the film (MFT) is not particularly limited. The hardness of the film formed by drying the resin emulsion (B) is not particularly limited and the film preferably has a pencil hardness of 2B to 2H, as determined according to JIS K5400-5-4.

The particles in the resin emulsion (B) preferably have an average particle diameter of 20 nm to 1000 nm, more preferably 20 nm to 500 nm, still more preferably 20 nm to 350 nm. The particle diameter of the resin emulsion is determined with JEM-2100TM, ex JOEL.

The acrylic resin emulsion may be one obtained by any known method, for example, emulsion polymerization using an anionic or nonionic emulsifier, or may be a commercially available product.

Examples of the (meth)acrylic monomer include methyl acrylate, ethyl acrylate, butyl acrylate, 2-ethylhexyl acrylate, methyl methacrylate, acrylic acid, methacrylic acid, and crotonic acid. The glass transition temperature (Tg) of the (meth)acrylic monomer is 120°C or lower, preferably 60°C or lower, more preferably 30°C or lower. The lower limit of the glass transition temperature is preferably -50°C.

Examples of the commercially available acrylic resin emulsion include VINYBRAN, ex Nisshin Chemical, Yodosol, ex. Henkel Japan, and Aron, ex Toagosei.

The urethane resin emulsion may be synthesized by any known method, for example, by emulsion polymerization using an anionic or nonionic emulsifier, or a commercially available product.

Examples of the urethane resin emulsion include emulsions of various watersoluble urethane resins which are a product of obtained by reacting polyisocyanate with a polyol such as polyether, polycarbonate, or polyester. The urethane resin emulsion preferably has a particle diameter of 10 to 500 nm so as to have a film-forming ability and preferably has a viscosity (25°C) of 10 to 500 mPa·s. The glass transition temperature (Tg) is 120°C or lower, preferably 60°C or lower, more preferably 30°C or lower. The lower limit of the glass transition temperature is preferably -50°C. The glass transition temperature is determined according to JIS K7121.

Examples of the commercially-available polyether-based urethane resin emulsion include Adeka Bontighter HUX-350, ex Adeka Corporation, WLS-201 and WLS-202, all ex DIC Corporation, and Superflex E-4000 and E-4800, all ex DKS Co. Ltd. Examples of the polycarbonate-based urethane resin emulsion include Hydran WLS-210 and WLS-213, all ex DIC corporation, UW-1005E and UW-5502, all ex Ube Industries Ltd., Permarin UA-368, ex Sanyo Chemical, Ltd., and Superflex 460 and Superflex 470, ex DKS Co., Ltd. Examples of the polyester-based urethane resin emulsion include Adeka Bontighter HUX-380 and HUX-540, all ex Adeka Corporation and Superflex 420 and Superflex 860, all ex DKS Co., Ltd.

The alkyd resin emulsion is obtained, for example, by a method of neutralizing an alkyd resin having a high acid value with a basic compound such as amine compound to obtain an aqueous emulsion; a method of introducing a hydrophilic group such as polyoxyethylene group into an alkyd resin to cause the alkyd resin to self-emulsify in water on account of the hydrophilic group; a method of forcibly vigorously stirring an alkyd resin to disperse in water in the presence of an emulsifying agent by a high-speed stirrer such as a disper mixer; or a method of stirring an alkyd resin having a low acid value by a high-speed stirrer to obtain alkyd resin particles having a water dispersibility and treating the particles by a disperser having a specific high-energy shearing ability for atomization to atomize in order to enhance the water dispersibility and to make the particle diameters smaller and more uniform; and combination of these methods. Alternatively, a commercially available product may be used.

Examples of the commercially available alkyd resin emulsion include Watersol series, ex DIC corporation.

The amount of the resin emulsion (B) is, as a solid content, 20 to 80 parts by mass, preferably 30 to 78 parts by mass, more preferably 40 to 75 parts by mass, relative to the total 100 parts by mass of the solid content of component (A), the solid content of component (B), component (C), and component (D). The coating composition may comprise the resin emulsion in a solid content of 10 to 35 mass%, preferably 15 to 32 mass %. If the amount (solid content) of the resin emulsion is less than the aforesaid lower limit, film properties such as abrasion resistance may be significantly worse. If the amount of the resin emulsion is more than the aforesaid upper limit, the feel is worse.

(C) Pigment

The pigment (C) may be any known pigment to be incorporated in a coating composition and may be either an inorganic pigment or an organic pigment. Examples of the inorganic pigment include titanium oxide, red iron oxide (blood red), yellow iron oxide, black iron oxide, Prussian blue, zinc oxide, cobalt blue, emerald green, viridian, and titanium white. Examples of the organic pigment include alkali blue, lithol red, carmine 6B, disazo yellow, phthalocyanine blue, quinacridone red, and isoindoline yellow.

The average particle diameter of the pigment (C) is not particularly limited and is preferably 5 nm to 10 μm, more preferably 10 nm to 5 μm. The average particle diameter of the pigment is a volume average particle diameter determined by a laser diffraction particle size analyzer.

The amount of the pigment (C) is 1 to 50 parts by mass, preferably 5 to 35 parts by mass, relative to the total 100 parts by mass of the solid content of component (A), the solid content of component (B), and components (C) and (D). The coating composition may comprise 0.1 to 25 mass%, preferably 0.5 to 20 mass%, of the pigment. If the amount of the pigment is less than the aforesaid lower limit, the hiding property is poor, so that design may not be changed. If the amount of the pigment is more than the aforesaid upper limit, dispersibility is poor, so that aggregation occurs in coating, which is not preferred.

(D) Flame retardant

The flame retardant (D) may be any conventional one to be incorporated in coating compositions and may be, for example, an inorganic component improving flame-retardancy. Examples of such include phosphorus compounds (triphenyl phosphate, tricresyl phosphate, trixylenyl phosphate, tris(β-chloropropyl) phosphate, tris(dichloropropyl) phosphate, condensed phosphoric acid ester, and ammonium polyphosphate), hydrated metal compounds such as aluminum hydroxide and magnesium hydroxide, zinc borate, molybdenum compounds (molybdenum trioxide), and antimony compounds (antimony oxide, antimony pentoxide, and sodium antimonate).

The amount of the flame retardant (D) is 1 to 10 parts by mass, more preferably 1 to 5 parts by mass, relative to the total 100 parts by mass of the solid content of component (A), the solid content of component (B), and components (C) and (D). The coating composition may comprise 0.1 to 5 mass%, preferably 0.5 to 2 mass% of the flame retardant, relative to the total mass of the coating composition. If the amount is less than the aforesaid lower limit or more than the aforesaid upper limit, stain resistance and weather resistance may be worse. The average particle diameter of the flame retardant is preferably 0.5 to 20 μm. The average particle diameter is a volume average particle diameter, as determined by a laser diffraction particle size analyzer.

(E) Matting agent

The coating composition of the present invention may further comprise (E) matting agent. The matting agent (E) may be any conventional one to be incorporated in coating compositions. Examples of the matting agent include silica, crosslinking-type acrylic resins, and crosslinking-type urethane resins. The coating film may have a matte or semi-gloss appearance by adjusting the amount or kind of the matting agent.

The average particle diameter of the matting agent (E) is not particularly limited and is preferably 0.5 μm to 30 μm, more preferably 1 μm to 15 μm. The average particle diameter of the matting agent is a volume average particle

diameter, as determined by a laser diffraction particle size analyzer.

The amount of the matting agent (E) is preferably 0.5 to 20 mass%, more preferably 1 to 15 mass%, still more preferably 2 to 10 mass%, relative to the total mass of the coating composition. If the amount of the matting agent is less than the lower limit, the matting effect may not be obtained at all. If the amount is more than the aforesaid upper limit, the resulting coating composition may be whitened.

The coating composition of the present invention is prepared by mixing the silicone acrylic copolymer resin emulsion (A), the resin emulsion (B), the pigment (C) dispersed in water in advance, the flame retardant (D) and, if needed, the matting agent (E) dispersed in water in advance, by a known mixing method in an aqueous system with a propeller type stirrer, homogenizer, ball mill, beads mill, or disperser mixer.

For example, component (A), the aqueous dispersion of component (C), and the aqueous dispersion of components (D) and (E) are poured in component (B) under stirring at 500 rpm by a disperser mixer, followed by stirring at 1000 rpm for 30 minutes to obtain the coating composition of the present invention.

The range of the drying temperature (MFT) for forming a coating of the coating composition is not particularly limited and is preferably 30°C or lower. The hardness of the coating is not particularly limited, but preferably a pencil hardness of 2B to 4H, more preferably 2B to 2H. The hardness is determined according to JIS K5400-5-4.

The coating composition of the present invention may further comprise an antioxidant, an ultraviolet absorber, an anti-freezing agent, a pH regulator, an antiseptic, an anti-foaming agent, an anti-fungus agent, a mildew-proofing agent, a light stabilizer, an antistatic, a plasticizer, a flame retardant, a thickener, a surfactant, an organic solvent such as film-forming aid, and other resins.

A coating is formed by applying the present coating composition for furniture or building interior to one or both surfaces of a substrate such as wood, metal, resin or ceramic or by dipping a substrate in the present coating composition; and then drying the coating composition at room temperature to 150°C. The coating formed from the present coating composition gives the advantages of a silicone resin such as water repellency, weather resistance, heat resistance, cold resistance, gas permeability, and sliding properties to the substrate for a long period of time, while maintaining the merits of the substrate. These effects may be obtained by a strong sea-island morphology formed by the resin (B) having a film-forming ability and the curable silicone resin (A).

Examples of the wood substrate include lumbers of the family Aceraceae, Betulaceae, Lauraceae, Castanea, Scrophulariaceae, Araucaria, Ulmaceae, Bignoniaceae, Rosaceae, Cupressaceae, Dipterocarpaceae, Myrtaceae, Fagaceae, Pinaceae, Leguminosae, and Oleaceae. The wood substrate is preferably dried by hot air at 20 to 150°C, particularly 50 to 150°C, for 0.5 to 5 hours. If the drying temperature is adjusted to 120°C or lower, discoloration of the coating may be avoided.

Examples of the metal as the substrate include Si, Cu, Fe, Ni, Co, Au, Ag, Ti, Al, Zn, Sn, and Zr, and alloys thereof.

Examples of the resin for the substrate include poly(meth)acrylic acid esters such as polymethyl methacrylate, polycarbonates, polystyrenes, polyethylene terephthalate, polyvinyl chloride, polyesters, celluloses, diethylene glycol bisallyl carbonate polymers, acrylonitrile-butadiene-styrene polymers, polyurethanes, and epoxy resins. The substrate may be dried by being left at room temperature for 1 to 10 days, but preferably by heating at 20 to 150°C for 1 second to 10 hours for speedy curing. When the substrate is made of a resin prone to deform or discolor by heating, it is dried preferably at a relatively low temperature within 20 to 100°C.

Examples of the ceramic substrate include calcined products of an oxide, carbide, or nitride.

The method of applying the coating composition of the present invention on the substrate is not particularly limited and includes coating methods with various coaters such as gravure coater, bar coater, blade coater, roll coater, air knife coater, screen coater, and curtain coater; spray coating, dipping, and brushing.

The coating amount of the coating composition is not particularly limited. From the standpoint of stain resistance and coating workability, the coating composition usually may preferably be applied in a coating amount of 1 to 300 g/$m^2$, more preferably 5 to 100 g/$m^2$ as a solid content, or at a dry coating thickness of 1 to 500 $\mu$m, preferably 5 to 100 $\mu$m. Then the composition is preferably naturally dried or heat-dried at 100 to 200°C to form a film.

The coating composition of the present invention is applied to furniture or building interior material to, thereby, give excellent feel, abrasion resistance, and stain resistance to the furniture or building interior material. An article comprising a coating formed from the aforesaid coating composition has excellent feel, abrasion resistance, and stain resistance, while maintaining the original design of the substrate.

## EXAMPLES

The present invention will be explained below in further detail with reference to a series of the Examples and the Comparative Examples, although the present invention is in no way limited by these Examples.

Hereinafter, "part" or "%" represents part by mass or mass%, respectively. The weight average molecular weight was calculated from a specific viscosity, $\eta sp$, at 25°C of a 1 g/100 ml solution in toluene of the polyorganosiloxane by the aforesaid method. The particle diameter of the resin emulsions obtained in the following Preparation Examples

and Comparative Preparation Examples was determined by JEM-2100TM, ex JEOL.

Determination of the Solid Content

Approximately 1g of each of the resin emulsion (sample) was placed in an aluminum foil dish and accurately weighed, placed in a dryer kept at about 105°C, left for 1 hour, taken out from the dryer, allowed to cool in a desiccator, and then weighed. The solid content was calculated by the following formula:

$$R = \frac{T - L}{W - L} \times 100$$

R: Solid content in %
W: Mass in grams of the aluminum foil dish and the undried sample
L: Mass in grams of the aluminum foil dish
T: Mass in grams of the aluminum foil dish and the dried sample

<u>Preparation of the silicone acrylic copolymer resin emulsion (A)</u>

Preparation Example 1

600 Grams of octamethylcyclotetrasiloxane, 0.48 g of γ-methacryloxypropyl methyldiethoxysilane, a solution of 6 g of sodium lauryl sulfate in 54g of pure water and a solution of 6g of dodecylbenzene sulfonate in 54g of pure water were placed in a 2L beaker made of polyethylene, and uniformly emulsified by a homo-mixer, which was then diluted by adding 470g of water little by little, and passed through a high-pressure homogenizer at a pressure of $300kgf/cm^2$ twice to obtain a uniform milky-white emulsion. The emulsion was transferred to a 2L glass flask equipped with a stirrer, a thermometer and a reflux condenser, and allowed to polymerize at 55°C for 24 hours, followed by aging at 15°C for 24 hours and neutralization around a neutral point with 12g of a 10% aqueous solution of sodium carbonate.
The structure of the polyorganosiloxane obtained by the polymerization was confirmed by $^1H$-NMR and $^{29}Si$-NMR (JNM-ECA600, determination solvent: $CDCl_3$; $^1H$: frequency: 600MHz, room temperature, integration times: 128; and $^{29}Si$: frequency: 600MHz, room temperature, integration times: 5000) . The polyorganosiloxane was represented by the following formula (1-1) and had an Mw (weight average molecular weight determined by the aforesaid method) of 250,000.

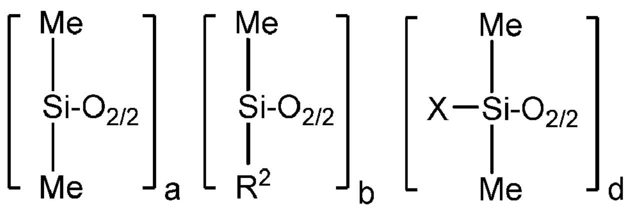

(1-1)

wherein $R^2$ is a γ-methacryloxypropyl group and X is a hydroxyl or ethoxy group and the proportions of a, b and d are shown in Table 1.
To the aforesaid neutralized reaction mixture (containing 534 g of the polyorganosiloxane obtained above), 232 g of methyl methacrylate (MMA) was added dropwise over a period of 3 to 5 hours under a redox reaction between a peroxide and a reducing agent at 30°C to proceed acrylic copolymerization with the polyorganosiloxane to obtain a silicone acrylic copolymer resin emulsion having a solid content of 45.2%. The average particle diameter and solid content of the silicone acrylic copolymer resin emulsion are shown in Table 2.

Preparation Example 2

600 Grams of octamethylcyclotetrasiloxane, 0.60 g of γ-methacryloxypropyl methyldiethoxysilane, a solution of 6 g of sodium lauryl sulfate in 54g of pure water and a solution of 6g of dodecylbenzene sulfonate in 54g of pure water

were placed in a 2L beaker made of polyethylene, and uniformly emulsified by a homo-mixer, which was then diluted by adding 470g of water little by little, and passed through a high-pressure homogenizer at a pressure of $300kgf/cm^2$ twice to obtain a uniform milky-white emulsion. The emulsion was transferred to a 2L glass flask equipped with a stirrer, a thermometer and a reflux condenser, and allowed to polymerize at 55°C for 24 hours, followed by aging at 5°C for 24 hours and neutralization around a neutral point with 12g of a 10% aqueous solution of sodium carbonate.

The structure of the polyorganosiloxane obtained by the polymerization was confirmed by $^1$H-NMR ( JNM-ECA600, determination solvent: $CDCl_3$, determination conditions are same as those in Preparation Example 1). It was confirmed that the polyorganosiloxane was represented by the aforesaid formula (1-1) and had an Mw (weight average molecular weight determined by the aforesaid method) of 400,000.

In the aforesaid formula (1-1), $R^2$ is a γ-methacryloxypropyl group and X is a hydroxyl or ethoxy group. The proportions of a, b and d are shown in Table 1.

To the aforesaid neutralized reaction mixture (containing 534 g of the polyorganosiloxane obtained above), 61 g of methyl methacrylate (MMA) was added dropwise over a period of 3 to 5 hours under a redox reaction between a peroxide and a reducing agent at 30°C to proceed acrylic copolymerization with the polyorganosiloxane to obtain a silicone acrylic copolymer resin emulsion having a solid content of 44.8%. The average particle diameter and solid content of the silicone acrylic copolymer resin emulsion are shown in Table 2.

Preparation Example 3

300 Grams of octamethylcyclotetrasiloxane, 300 g of diphenyldimethylsiloxane (KF-54, ex Shin-Etsu Chemical Co., Ltd), 0.96 g of γ-methacryloxypropyl methyldiethoxysilane, a solution obtained by diluting 24 g of 50% sodium alkyl diphenyl ether disulfonate (Pelex SS-L, ex Kao Corporation) with 45 g of pure water, and a solution of 6g of dodecylbenzene sulfonate in 54g of pure water were placed in a 2L beaker made of polyethylene, and uniformly emulsified by a homo-mixer, which was then diluted by adding 490g of water little by little, and passed through a high-pressure homogenizer at a pressure of $300kgf/cm^2$ twice to obtain a uniform milky-white emulsion. The emulsion was transferred to a 2L glass flask equipped with a stirrer, a thermometer and a reflux condenser, and allowed to polymerize at 55°C for 10 to 20 hours, followed by aging at 10°C for 10 to 20 hours and neutralization around a neutral point with 12g of a 10% aqueous solution of sodium carbonate.

The structure of the polyorganosiloxane obtained by the polymerization was confirmed by $^1$H-NMR ( JNM-ECA600, determination solvent: $CDCl_3$, determination conditions are same as those in Preparation Example 1). It was confirmed that the polyorganosiloxane was represented by the following formula (1-2) and had an Mw (weight average molecular weight determined by the aforesaid method) of 8,000.

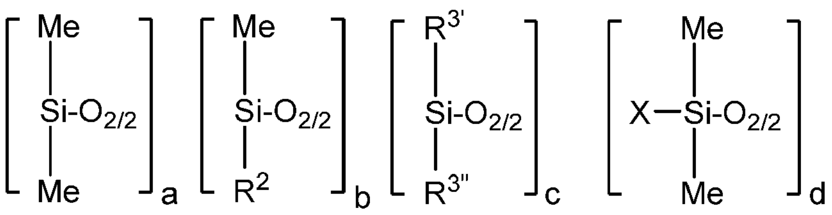

(1-2)

wherein $R^2$ is a γ-methacryloxypropyl group, $R^{3'}$ and $R^{3''}$ are a phenyl or methyl group, at least one of $R^{3'}$ and $R^{3''}$ is a phenyl group, and X is a hydroxyl or ethoxy group and the proportions of a, b, c and d are shown in Table 1.

The emulsion obtained by the aforesaid neutralization had a nonvolatile content (solid content) of 47.5% after drying at 105°C for 3 hours.

To the aforesaid neutralized reaction mixture (containing 534 g of the polyorganosiloxane obtained above), 242 g of methyl methacrylate (MMA) was added dropwise over a period of 3 to 5 hours under a redox reaction between a peroxide and a reducing agent at 30°C to proceed acrylic copolymerization with the polyorganosiloxane to obtain a silicone acrylic copolymer resin emulsion having a solid content of 45.5%. The average particle diameter and solid content of the silicone acrylic copolymer resin emulsion are shown in Table 2.

Preparation Example 4

The procedures of Preparation Example 1 were repeated to obtain a uniform milky-white emulsion. As in Preparation Example 1, the emulsion was transferred to a 2L glass flask equipped with a stirrer, a thermometer and a

reflux condenser, and allowed to polymerize at 55°C for 24 hours, followed by aging at 15°C for 24 hours and neutralization around a neutral point with 12g of a 10% aqueous solution of sodium carbonate. It was confirmed that the polyorganosiloxane was represented by the aforesaid formula (1-1) and had an Mw (weight average molecular weight determined by the aforesaid method) of 250,000.

To the aforesaid neutralized reaction mixture (containing 534 g of the polyorganosiloxane obtained above), 116 g of butyl acrylate (BA) and 116 g of methyl methacrylate (MMA) were added dropwise over a period of 3 to 5 hours under a redox reaction between a peroxide and a reducing agent at 30°C to proceed acrylic copolymerization with the polyorganosiloxane to obtain a silicone acrylic copolymer resin emulsion having a solid content of 44.9%. The average particle diameter and solid content of the silicone acrylic copolymer resin emulsion are shown in Table 2.

Comparative Preparation Example 1

The procedures of Preparation Example 1 were repeated to obtain a uniform milky-white emulsion. As in Preparation Example 1, the emulsion was transferred to a 2L glass flask equipped with a stirrer, a thermometer and a reflux condenser, and allowed to polymerize at 55°C for 24 hours, followed by aging at 15°C for 24 hours and neutralization around a neutral point with 12g of a 10% aqueous solution of sodium carbonate. It was confirmed that the polyorganosiloxane was represented by the aforesaid formula (1-1) and had an Mw (weight average molecular weight determined by the aforesaid method) of 250,000.

To the aforesaid neutralized reaction mixture (containing 534 g of the polyorganosiloxane obtained above), 541 g of methyl methacrylate (MMA) was added dropwise over a period of 3 to 5 hours under a redox reaction between a peroxide and a reducing agent at 30°C to proceed acrylic copolymerization with the polyorganosiloxane to obtain a silicone acrylic copolymer resin emulsion having a solid content of 45.5%. The average particle diameter and solid content of the silicone acrylic copolymer resin emulsion are shown in Table 2.

Comparative Preparation Example 2

The procedures of Preparation Example 1 were repeated to obtain a uniform milky-white emulsion. As in Preparation Example 1, the emulsion was transferred to a 2L glass flask equipped with a stirrer, a thermometer and a reflux condenser, and allowed to polymerize at 55°C for 24 hours, followed by aging at 15°C for 24 hours and neutralization around a neutral point with 12g of a 10% aqueous solution of sodium carbonate. It was confirmed that the polyorganosiloxane was represented by the aforesaid formula (1-1) and had an Mw (weight average molecular weight determined by the aforesaid method) of 250,000.

The polyorganosiloxane was not subjected to acrylic copolymerization and the preparation was completed. The silicone resin emulsion obtained had a nonvolatile content of 44.8%. The average particle diameter and solid content of the silicone resin emulsion are shown in Table 2.

Comparative Preparation Example 3

552 Grams of octamethylcyclotetrasiloxane, 48 g of γ-methacryloxypropyl methyldiethoxysilane, and a solution of 6 g of sodium lauryl sulfate in 54g of pure water and a solution of 6g of dodecylbenzene sulfonate in 54g of pure water were placed in a 2L beaker made of polyethylene, and uniformly emulsified by a homo-mixer, which was then diluted by adding 470g of water little by little, and passed through a high-pressure homogenizer at a pressure of 300kgf/$cm^2$ twice to obtain a uniform milky-white emulsion. The emulsion was transferred to a 2L glass flask equipped with a stirrer, a thermometer and a reflux condenser, and allowed to polymerize at 55°C for 24 hours, followed by aging at 15°C for 24 hours and neutralization around a neutral point with 12g of a 10% aqueous solution of sodium carbonate.

The structure of the polyorganosiloxane obtained by the polymerization was confirmed by $^1$H-NMR (JNM-ECA600, determination solvent: $CDCl_3$, determination conditions are same as those in Preparation Example 1). It was confirmed that the polyorganosiloxane was represented by the following formula (1-3) and had an Mw (weight average molecular weight determined by the aforesaid method) of 250,000.

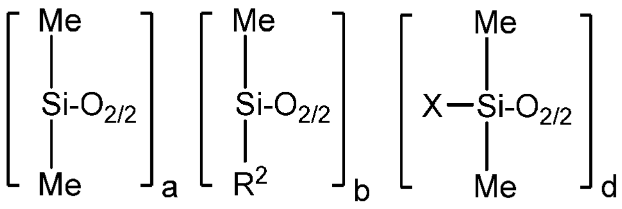

(1-3)

wherein $R^2$ is a γ-methacryloxypropyl group and X is a hydroxyl or ethoxy group and the proportions of a, b and d are shown in Table 1.

To the aforesaid neutralized reaction mixture (containing 534 g of the polyorganosiloxane obtained above), 232 g of methyl methacrylate (MMA) was added dropwise over a period of 3 to 5 hours under a redox reaction between a peroxide and a reducing agent at 30°C to proceed acrylic copolymerization with the polyorganosiloxane to obtain a silicone acrylic copolymer resin emulsion having a solid content of 45.0%. The average particle diameter and solid content of the silicone acrylic copolymer resin emulsion are shown in Table 2.

[Table 1]

| | Preparation Example | | | | Comparative Preparation Example | | |
|---|---|---|---|---|---|---|---|
| | 1 | 2 | 3 | 4 | 1 | 2 | 3 |
| Mass proportion of the raw materials for polyorganosiloxane (a1) | | | | | | | |
| D4 | 100 | 100 | 50 | 100 | 100 | 100 | 100 |
| KF-54 | 0 | 0 | 50 | 0 | 0 | 0 | 0 |
| sodium lauryl sulfate | 1 | 1 | | 1 | 1 | 1 | 1 |
| Pelex SS-L | | | 2 | | | | |
| dodecylbenzene sulfonate | 1 | 1 | 1 | 1 | 1 | 1 | 1 |
| γ-methacryloxypropyl methyldiethoxysilane | 0.08 | 0.1 | 0.16 | 0.08 | 0.08 | 0.08 | 8.7 |
| Proportions of a to d in polyorganosiloxane (a1), based on a total 100 of a to d. | | | | | | | |
| a | 99.91 | 99.93 | 67.22 | 99.91 | 99.91 | 99.91 | 93.94 |
| b | 0.03 | 0.03 | 0.48 | 0.03 | 0.03 | 0.03 | 6 |
| c | 0 | 0 | 28.5 | 0 | 0 | 0 | 0 |
| d | 0.06 | 0.04 | 3.8 | 0.06 | 0.06 | 0.06 | 0.06 |
| D4: octamethyl cyclotetrasiloxane<br>KF-54: diphenyl dimethyl siloxane<br>Pelex SS-L: 50 % sodium alkyl diphenyl ether disulfonate | | | | | | | |

[Table 2]

| Parts by mass | Preparation Example | | | | Comparative Preparation Example | | |
|---|---|---|---|---|---|---|---|
| | 1 | 2 | 3 | 4 | 1 | 2 | 3 |
| (a1) Polyorganosiloxane | 70 | 90 | 70 | 70 | 50 | 100 | 70 |

(continued)

| Parts by mass | Preparation Example | | | | Comparative Preparation Example | | |
|---|---|---|---|---|---|---|---|
| | 1 | 2 | 3 | 4 | 1 | 2 | 3 |
| (a2) Methyl methacrylate | 30 | 10 | 30 | 15 | 50 | 0 | 30 |
| (a2) Butyl acrylate | | | | 15 | | | |
| Av. particle diameter, nm | 240 | 230 | 240 | 230 | 240 | | 220 |
| Solid content, % | 45.2 | 45.0 | 45.3 | 44.9 | 45.5 | | 45.0 |

Production Example 1

Preparation of an aqueous dispersion containing the pigment (C)

112 Parts of ion-exchanged water, 30 parts of Demol EP (polycarboxylic acid-based surfactant having a high molecular weight, ex Kao Corporation), 50 parts of Discoat N-14 (aqueous dispersion of an ammonium salt of a styrene-maleic acid monoester copolymer, ex DKS Co., Ltd.), 25 parts of propylene glycol, 500 parts of titanium oxide (C) (Tipaque CR-95 (ex Ishihara Sangyo Kaisha, Ltd., Rutile type titanium oxide having an average particle diameter of 0.28 μm), and 100 parts of glass beads (diameter: 1 mm) were stirred and dispersed with a homodisper at a rotation speed of 3000 rpm for 60 minutes, and then filtered through a 100-mesh metal screen to obtain an white paste.

Production Example 2

Preparation of an aqueous dispersion containing the flame retardant (D) and the matting agent (E)

80 Parts of ion-exchanged water, 10 parts of ALH-3L (heat-resistant aluminum hydroxide, ex Kawai Lime Industry Co., Ltd., average particle diameter: 4.5 μm, 1% thermal decomposition temperature: 280°C) as the flame retardant (D), and 10 parts of Silysia 550 (colloidal silica, ex Fuji Silysia Chemical Ltd., average particle diameter: 4 μm, pore volume: 0.8 ml/g) as the matting agent (E) were mixed and stirred with a disper mixer at 1000 rpm for 20 minutes to obtain an aqueous dispersion.

Production Example 3

Preparation of an aqueous dispersion containing the flame retardant (D)

80 Parts of ion-exchanged water and 20 parts of ALH-3L (heat-resistant aluminum hydroxide, ex Kawai Lime Industry Co., Ltd., average particle diameter: 4.5 μm, 1% thermal decomposition temperature: 280°C) as the flame retardant (D) were mixed and stirred with a disper mixer at 1000 rpm for 20 minutes to obtain an aqueous dispersion.

Production Example 4

Preparation of an aqueous dispersion containing the matting agent (E)

80 Parts of ion-exchanged water and 20 parts of Silysia 550 (colloidal silica, ex Fuji Silysia Chemical Ltd., average particle diameter: 4 μm, pore volume: 0.8 ml/g) as the matting agent (E) were mixed and stirred with a disper mixer at 1000 rpm for 20 minutes to obtain an aqueous dispersion.

The following are resin emulsions (B) used in the following Examples and Comparative Examples.

Aron A-104 (aqueous acrylic resin emulsion, ex Toagosei Co., Ltd., solid content: 40%)

Hydran WLF-213 (polyurethane dispersion, ex DIC Corporation, solid content: 35%, average molecular weight: 150,000)

Watersol BCD-3100 (aqueous solution of polyester/alkyd resin, ex DIC Corporation, solid content: 43%)

Example 1

"Aron A-104" (trade name, viscosity: 300 to 1000 mPa·s, ex Toagosei Co., Ltd.) was used as the aqueous acrylic resin emulsion (B). According to the amounts shown in the following Table 3, the silicone acrylic copolymer resin emulsion (A) obtained in Preparation Example 1, the white paste obtained in Production Example 1, and the aqueous dispersion obtained in Production Example 2 were added to the aqueous resin emulsion under stirring. Ion-exchanged water was then added to adjust the solid content and the resulting mixture was stirred in a ball mill for 2 hours. The balls were filtered off using a 100 mesh screen to obtain an aqueous coating composition. The solid content in the coating composition was about 35%. The coating composition was applied to a cedar wood plate and a PET film by the following method to form coatings.

Examples 2 to 8 and Comparative Examples 1 to 10

The procedures in Example 1 were repeated, except that the composition was changed to those shown in the following Table 3 or 4, to thereby obtain aqueous coating compositions. The amount of the components was adjusted to give a solid content of about 40% in each of the coating compositions. The coating compositions thus obtained were each applied to a cedar wood plate or a PET film, respectively, by the following method to form coatings.

Examples 9 to 10 and Comparative Examples 11 and 12

The procedures in Example 1 were repeated, except that the composition was changed to that shown in the following Table 8, to thereby obtain aqueous coating compositions. The amounts of the components were adjusted to give a solid content of about 40% in the coating compositions. The coating compositions thus obtained were applied on a SUS303 stainless steel plate by the following method to form coatings.

Method for coating

The coating compositions were each applied on the substrate by a bar coater to give a dry film thickness of 26 μm and then left to stand at room temperature for 2 days to form coatings.

The feel, static and dynamic friction coefficients, and stain resistance of the coating films formed on the cedar wood plate and the SUS304 stainless steel plate were evaluated in the following manner.

The abrasion resistance of the coating films formed on the PET film was evaluated in the following manner.

Static/dynamic friction coefficient and feel

The friction force was determined using HEIDON TYPE-38 (ex. SHINTO Scientific Co. Ltd.), wherein a metal depressor of 200g weight was brought into vertical contact with the film at a right angle and moved at a speed of 3 cm/min to determine the friction force. The static friction coefficient and the dynamic friction coefficient were calculated from the friction force.

When the coating film showed a static friction coefficient of less than 0.10, a dynamic friction coefficient of less than 0.07, and a difference between the static friction coefficient and the dynamic friction coefficient of less than 0.05, the feel was evaluated as Good.

Abrasion resistance

The abrasion resistance of the aforesaid coating film on the PET film was determined by Gakushin-Type Rubbing Tester. The coating film on the PET film or on the wood plate was rubbed with a metal contact covered with a cotton cloth with a force of 100 gf. The cycle number was counted in a unit of 100 cycles until the coating film was damaged under visual observation. The number immediately before breakage is shown in the following Tables.

Stain resistance (easy removing of an image drawn by an aqueous marker pen or by crayon)

A section having an area of 5 mm × 2 cm of the coatings was blotted out with an aqueous marker or a crayon and dried at room temperature for 5 minutes. The section was rubbed repeatedly with tissue paper moistened with water. When 70% or more of the area of the section was cleaned up, stain resistance was evaluated as A. When 10 to 30% of the area was cleaned up, stain resistance was evaluated as B. When less than 10% of the area was cleaned up, stain resistance was evaluated as C. The evaluation results are as shown in the following Tables.

The coating composition was cast in a PE tray and dried at 60°C for 24 hours to obtain a film having an area

of 120 cm × 1.3 cm. The obtained film was subjected to a burning test and a weather resistance test as follows.

Burning Test

The film was laid on a stainless-steel plate. Flame of an ignition lighter was brought into contact with one end of the film and the time (sec.) until the other end burnt was determined. The longer the burning time, the better the flame retardancy.

Weather resistance test

The aforesaid film was subjected to accelerated weather resistance test for 500 hours under the conditions according to JIS A5759:2008 in a sunshine carbon arc weather-meter according to JIS B7753:2007.

When all of the test specimens from the specific film had no change in the appearance, for example, blisters, cracks, or peels, the film was evaluated as Excellent "E". Otherwise, the evaluation was Poor "P".

Water contact angle

On the coating film, a droplet of 0.2 μ of ion-exchanged water was contacted. After thirty seconds, the contact angle of the droplet was determined by an automatic contact angle meter DMO-601 (ex Kyowa Interface Science Co., Ltd.).

[Table 3]

| | | Example | | | | | | | |
|---|---|---|---|---|---|---|---|---|---|
| | | 1 | 2 | 3 | 4 | 5 | 6 | 7 | 8 |
| Component, part by mass | (A) Silicone-acrylic copolymer resin emulsion, (solid content %) | 8.4 (45.2%) | 8.4 (45.0%) | 8.4 (45.3%) | 8.4 (44.9%) | 8.4 (45.2%) | 8.4 (45.2%) | 34.2 (45.2%) | 8.4 (45.2%) |
| | (B) Resin emulsion, (solid content %) | 183 (40%) | 183 (40%) | 183 (40%) | 183 (40%) | 209 (35%) | 170.2 (43%) | 143.3 (40%) | 183 (40%) |
| | White paste in Production Ex. 1 | 27.4 | 27.4 | 27.4 | 27.4 | 27.4 | 27.4 | 27.4 | 27.4 |
| | Aqueous dispersion in Production Ex. 2 | 38 | 38 | 38 | 38 | 38 | 38 | 38 | |
| | Aqueous dispersion in Production Ex. 3 | | | | | | | | 19 |
| | Ion-exchanged water | 35 | 35 | 35 | 35 | 10 | 50 | 40 | 35 |
| | Total mass of the composition | 291.8 | 291.8 | 291.8 | 291.8 | 292.8 | 294.0 | 282.9 | 253.8 |
| | Solid content in the composition, % | 35.6% | 35.6% | 35.6% | 35.6% | 35.4% | 35.3% | 35.2% | 35.6% |

(continued)

| | | | Example | | | | | | | |
|---|---|---|---|---|---|---|---|---|---|---|
| | | | 1 | 2 | 3 | 4 | 5 | 6 | 7 | 8 |
| Solid content | (A) | Preparation Example 1 | 3.8 | | | | 3.8 | 3.8 | 3.8 | 3.8 |
| | | Preparation Example 2 | | 3.8 | | | | | | |
| | | Preparation Example 3 | | | 3.8 | | | | | |
| | | Preparation Example 4 | | | | 3.8 | | | | |
| | | Comparative Preparation Example 1 | | | | | | | | |
| | | Comparative Preparation Example 2 | | | | | | | | |
| | | Comparative Preparation Example 3 | | | | | | | | |
| | (B) | Aron A-104 | 73.2 | 73.2 | 73.2 | 73.2 | | | 73.2 | 73.2 |
| | | Hydran WLF-213 | | | | | 73.2 | | | |
| | | Watersol BCD-3100 | | | | | | 73.2 | | |
| | (C) | Pigment | 19.2 | 19.2 | 19.2 | 19.2 | 19.2 | 19.2 | 19.2 | 19.2 |
| | (D) | Flame retardant | 3.8 | 3.8 | 3.8 | 3.8 | 3.8 | 3.8 | 3.8 | 3.8 |
| | (E) | Matting agent | 3.8 | 3.8 | 3.8 | 3.8 | 3.8 | 3.8 | 3.8 | - |
| | Total solid content of components (A) to (D) | | 100 | 100 | 100 | 100 | 100 | 100 | 100 | 100 |

[Table 4]

| | | Comparative Example | | | | | | | | | |
|---|---|---|---|---|---|---|---|---|---|---|---|
| | | 1 | 2 | 3 | 4 | 5 | 6 | 7 | 8 | 9 | 10 |
| Component, part by mass | (A) Silicone-acrylic copolymer resin emulsion, (solid content %) | 0 | 0 | 0 | 8.4 (45.5%) | 8.4 | 8.4 (45.0%) | 68.4 (45.2%) | 0.33 (45.2%) | 8.7 (45.2%) | 7.6 (45.2%) |
| | (B) Resin emulsion, (solid content %) | 192.5 (40%) | 220 (35%) | 179.1 (43%) | 183 (40%) | 183 (40%) | 183 (40%) | 115.5 (40%) | 192.1 (40%) | 190.25 (40%) | 158.5 (40%) |
| | White paste in Production Ex. 1 | 27.4 | 27.4 | 27.4 | 27.4 | 27.4 | 27.4 | 27.4 | 27.4 | 28.5 | 23.7 |
| | Aqueous dispersion in Production Ex. 2 | 38 | 38 | 38 | 38 | 38 | 38 | 38 | 38 | | |
| | Aqueous dispersion in Production Ex. 3 | | | | | | | | | | 83 |
| | Aqueous dispersion in Production Ex. 4 | | | | | | | | | 19 | 19 |
| | Ion-exchanged water | 35 | 10 | 50 | 50 | 35 | 35 | 40 | 35 | 45 | |
| | Total mass of the composition | 292.9 | 295.4 | 294.5 | 306.8 | 291.8 | 291.8 | 289.3 | 292.83 | 291.45 | 291.8 |
| | Solid content in the composition, % | 35.4% | 35.1% | 35.2% | 35.6% | 35.6% | 35.6% | 35.9% | 35.4% | 35.6% | 35.6% |

(continued)

| | | | Comparative Example | | | | | | | | | |
|---|---|---|---|---|---|---|---|---|---|---|---|---|
| | | | 1 | 2 | 3 | 4 | 5 | 6 | 7 | 8 | 9 | 10 |
| Solid content | A | Preparation Example 1 | | | | | | | 30.8 | 0.15 | 3.9 | 3.4 |
| | | Preparation Example 2 | | | | | | | | | | |
| | | Preparation Example 3 | | | | | | | | | | |
| | | Preparation Example 4 | | | | | | | | | | |
| | | Comparative Preparation Example 1 | | | | 3.8 | | | | | | |
| | | Comparative Preparation Example 2 | | | | | 3.8 | | | | | |
| | | Comparative Preparation Example 3 | | | | | | 3.8 | | | | |
| | B | Aron A-104 (40%) | 77 | | | 73.2 | 73.2 | 73.2 | 46.2 | 76.85 | 76.1 | 63.4 |
| | | Hydran WLF-213 (35%) | | 77 | | | | | | | | |
| | | Watersol BCD-3100 (43%) | | | 77 | | | | | | | |
| | C | Pigment | 19.2 | 19.2 | 19.2 | 19.2 | 19.2 | 19.2 | 19.2 | 19.2 | 20 | 16.6 |
| | D | Flame retardant | 3.8 | 3.8 | 3.8 | 3.8 | 3.8 | 3.8 | 3.8 | 3.8 | 0 | 16.6 |
| | E | Matting agent | 3.8 | 3.8 | 3.8 | 3.8 | 3.8 | 3.8 | 3.8 | 3.8 | 3.8 | 3.8 |
| Total solid content of components (A) to (D) | | | 100 | 100 | 100 | 100 | 100 | 100 | 100 | 100 | 100 | 100 |

[Table 5]

| Cedar wood plate and PET film | | Example | | | | | | | |
|---|---|---|---|---|---|---|---|---|---|
| | | 1 | 2 | 3 | 4 | 5 | 6 | 7 | 8 |
| Evaluation | Feel | Good | Good | Good | Good | Good | Good | Good | Good |
| | Water contact angle, ° | 90 | 95 | 90 | 91 | 88 | 85 | 91 | 82 |
| | Static friction coefficient | 0.065 | 0.051 | 0.078 | 0.06 | 0.082 | 0.079 | 0.06 | 0.095 |
| | Dynamic friction coefficient | 0.04 | 0.033 | 0.045 | 0.038 | 0.052 | 0.046 | 0.038 | 0.068 |
| | Abrasion resistance | 8500 | 11400 | 6900 | 10100 | 14200 | 10200 | 8100 | 4500 |
| | Stain resistance against aqueous marker pen | A | A | A | A | A | A | A | A |
| | Stain resistance against crayon | A | A | A | A | A | A | A | A |
| | Weather resistance | E | E | E | E | E | E | E | E |
| | Flame retardancy, sec. | 48 | 46 | 55 | 46 | 42 | 40 | 57 | 35 |

[Table 6]

| Cedar wood plate and PET film | | Comparative Example | | | | |
|---|---|---|---|---|---|---|
| | | 1 | 2 | 3 | 4 | 5 |
| Evaluation | Feel | Bad | Bad | Bad | Bad | Bad |
| | Water contact angle,° | 80 | 78 | 72 | 85 | 83 |
| | Static friction coefficient | 0.185 | 0.325 | 0.302 | 0.153 | 0.124 |
| | Dynamic friction coefficient | 0.143 | 0.251 | 0.205 | 0.099 | 0.087 |
| | Abrasion resistance | 1200 | 3200 | 2100 | 2300 | 2000 |
| | Stain resistance against aqueous marker pen | C | C | C | C | C |
| | Stain resistance against crayon | C | C | C | B | C |
| | Weather resistance | P | P | P | E | E |
| | Flame retardancy, sec. | 22 | 20 | 18 | 25 | 45 |

[Table 7]

| Cedar wood plate and PET film | | Comparative Example | | | | |
|---|---|---|---|---|---|---|
| | | 6 | 7 | 8 | 9 | 10 |
| Evaluation | Feel | Bad | Bad | Bad | Good | Bad |
| | Water contact angle,° | 90 | 78 | 80 | 89 | 75 |
| | Static friction coefficient | 0.178 | 0.105 | 0.18 | 0.07 | 0.124 |
| | Dynamic friction coefficient | 0.135 | 0.07 | 0.142 | 0.051 | 0.087 |
| | Abrasion resistance | 1900 | 2300 | 2100 | 8100 | 2700 |
| | Stain resistance against aqueous marker pen | C | C | C | B | C |
| | Stain resistance against crayon | C | B | C | B | C |
| | Weather resistance | E | P | P | P | P |
| | Flame retardancy, second | 46 | 30 | 20 | 18 | 50 |

[Table 8]

| | | | Example | | Comparative Example | |
|---|---|---|---|---|---|---|
| | | | 9 | 10 | 11 | 12 |
| Component, parts by mass | | (A) Silicone-acrylic copolymer resin emulsion, (solid content %) | 8.4 (45.2%) | 8.4 (45.0%) | | |
| | | (B) Resin emulsion, (solid content %) | 183 (40%) | 209.1 (35%) | 192.5 (40%) | 192.5 (40%) |
| | | White paste in Production Ex. 1 | 27.4 | 27.4 | 27.4 | 27.4 |
| | | Aqueous dispersion in Production Ex. 2 | 38 | 38 | 38 | 38 |
| | | Ion-exchanged water | 35 | 10 | 35 | 35 |
| | | Total mass of the composition | 291.8 | 292.9 | 292.9 | 292.9 |
| | | Solid content in the composition, % | 35.6% | 35.4% | 35.4% | 35.4% |
| Solid content | (A) | Preparation Example 1 | 3.8 | | | |
| | | Preparation Example 2 | | 3.8 | | |
| | | Preparation Example 3 | | | | |
| | | Preparation Example 4 | | | | |
| | | Comparative Preparation Example 1 | | | | |
| | | Comparative Preparation Example 2 | | | | |
| | | Comparative Preparation Example 3 | | | | |
| | (B) | Aron A-104 (40%) | 73.2 | | 77 | 77 |
| | | Hydran WLF-213 (35%) | | 73.2 | | |
| | | Watersol BCD-3100 (43%) | | | | |
| | (C) | Pigment | 19.2 | 19.2 | 19.2 | 19.2 |
| | (D) | Flame retardant | 3.8 | 3.8 | 3.8 | 3.8 |
| | (E) | Matting agent | 3.8 | 3.8 | 3.8 | 3.8 |
| | Total solid content of components (A) to (D) | | 100 | 100 | 100 | 100 |

(continued)

| | | Example | | Comparative Example | |
|---|---|---|---|---|---|
| | | 9 | 10 | 11 | 12 |
| Evaluation (stainless) | Feel | Good | Good | Bad | Bad |
| | Water contact angle,° | 95 | 92 | 83 | 82 |
| | Static friction coefficient | 0.052 | 0.072 | 0.18 | 0.333 |
| | Dynamic friction coefficient | 0.033 | 0.047 | 0.133 | 0.263 |
| | Stain resistance against aqueous marker pen | A | A | C | C |
| | Stain resistance against crayon | A | A | C | C |
| | Weather resistance | E | E | P | P |

As seen in Tables 5 to 8, the coating composition of the present invention forms a coating which gives excellent feel, abrasion resistance, stain resistance, flame retardancy, and weather resistance to various substrates. The coating composition of the present invention is aqueous and, therefore, advantageous in view of workability and the environment. The aqueous coating composition of the present invention is suited for coating furniture or building interior.

## Claims

**1.** A coating composition comprising the following components (A) to (D):

(A) an emulsion of a silicone acrylic copolymer resin comprised of 60 to 99 parts by mass of (a1) a polyorganosiloxane represented by the following formula (1) and 1 to 40 parts by mass of (a2) an acrylic acid ester monomer and/or a methacrylic acid ester monomer, provided that the total amount of components (a1) and (a2) is 100 parts by mass,

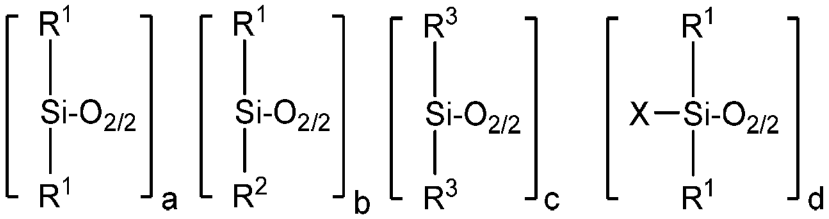

(1)

wherein $R^1$ is, independently of each other, a substituted or unsubstituted monovalent hydrocarbon group having 1 to 20 carbon atoms, precluding the groups defined for $R^2$ and a phenyl group; $R^2$ is, independently of each other, an alkenyl group having 2 to 6 carbon atoms or an alkyl group which has 1 to 6 carbon atoms and of which a part of the hydrogen atoms bonded to a carbon atom is substituted with a mercapto group, a vinyl group, an acryloxy group, or a methacryloxy group; $R^3$ is, independently of each other, a phenyl group or the group defined for $R^1$, and at least one of the $R^3$s bonded to the same silicon atom is a phenyl group; and X is, independently of each other, a substituted or unsubstituted monovalent hydrocarbon group having 1 to 20 carbon atoms, an alkoxy group having 1 to 20 carbon atoms, or a hydroxyl group; a, b, c and d are numbers satisfying the equations: $0.11 \leq a/(a+b+c+d) < 1$, $0.00001 \leq b/(a+b+c+d) \leq 0.05$, $0 \leq c/(a+b+c+d) \leq 0.6$, and $0.000001 \leq d/(a+b+c+d) \leq 0.24$; the emulsion being in an amount of 0.5 to 20 parts by mass as a solid content;
(B) at least one resin emulsion in an amount of 20 to 80 parts by mass as a solid content, selected from the group consisting of an acrylic resin emulsion other than component (A), a urethane resin emulsion and an alkyd resin emulsion;
(C) a pigment in an amount of 1 to 50 parts by mass; and
(D) a flame retardant in an amount of 1 to 10 parts by mass,
provided that the total mass of the solid contents of components (A) and (B) and the amounts of components

(C) and (D) is 100 parts by mass.

2. The coating composition according to claim 1, wherein the emulsion particles of the emulsion of the silicone acrylic copolymer resin (A) have an average particle diameter of 100 nm to 1200 nm.

3. The coating composition according to claim 1 or claim 2, further comprising a matting agent (E) in an amount of 0.5 to 20 mass% based on the total mass of the coating composition.

4. The coating composition according to any one of claims 1 to 3 for coating furniture or building interior.

5. A coating formed from the coating composition according to any one of claims 1 to 4.

6. The coating according to claim 5, wherein the difference between the static friction coefficient and the dynamic friction coefficient is less than 0.05.

7. An article comprising a substrate and the coating according to claim 5 or claim 6, wherein the coating is present on one or both surfaces of the substrate.

8. The article according to claim 7, wherein the substrate is selected from the group consisting of wood, metal, resin, and ceramic.

9. A furniture comprising the article according to claim 7 or claim 8.

10. An interior material for a building, wherein the interior material comprises the article according to claim 7 or claim 8.

Europäisches Patentamt
European Patent Office
Office européen des brevets

# EUROPEAN SEARCH REPORT

Application Number
EP 22 15 3230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/069198 A1 (OKUDA HARUKAZU [JP] ET AL) 30 March 2006 (2006-03-30)<br>* abstract; table 3 *<br>* paragraph [0068] *<br>----- | 1-10 | INV.<br>C08G77/442<br>C08F283/12<br>C08L33/04<br>C08L67/00<br>C08L75/04 |

TECHNICAL FIELDS SEARCHED (IPC)

C08G
C09J
C08F
C08L

The present search report has been drawn up for all claims

2

| Place of search | Date of completion of the search | Examiner |
|---|---|---|
| The Hague | 15 June 2022 | Dalet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 15 3230

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2022

| Patent document cited in search report | Publication date | Patent family member(s) | Publication date |
|---|---|---|---|
| US 2006069198 A1 | 30-03-2006 | US 2006069198 A1 | 30-03-2006 |
| | | US 2009264576 A1 | 22-10-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021011978 A
- JP 2006341163 A
- JP 2011213941 A
- JP 2013067787 A


### Non-patent literature cited in the description


- **NAKAMUTA.** *Journal of the Chemical Society of Japan,* 1956, vol. 77, 858
- *Doklady Akad. Nauk. U.S.S.R.,* 1953